# FASCICULE DE BREVET EUROPEEN

(11) **EP 1 722 633 B1**
(45) Date de publication et mention de la délivrance du brevet: **18.06.2014**
(21) Numéro de dépôt: 05717565.5
(22) Date de dépôt: 04.02.2005
(51) Int. Cl.: A01N 47/22, A01N 61/00

(54) **Utilisation d'une composition insecticide synergique contre les moustiques, notamment pour l'imprégnation de moustiquaires**
Verwendung einer insektiziden Zusammensetzung gegen Mücken, insbesondere zur Imprägnierung von Mückennetzen
Use of a insecticidal composition againt mosquitoes, namely for impregnation of mosquito nets

(30) Priorité: 06.02.2004 US 541930 P; 25.03.2004 FR 0403082
(43) Date de publication de la demande: 22.11.2006
(73) Titulaire: Institut de Recherche pour le Développement ( IRD), 75480 Paris Cedex 10 (FR)
(72) Inventeur: HOUGARD, Jean-Marc, F-34032 Montpellier cedex 1 (FR); PENNETIER, Cédric, F-34000 Montpellier (FR)
(74) Mandataire: Grosset-Fournier, Chantal Catherine
(86) Numéro de dépôt international: PCT/FR2005/000262
(87) Numéro de publication internationale: WO 2005/079577

(56) Documents cités:
- WO-A-01/37662
- WO-A-02/15692
- JOURNAL OF ECONOMIC ENTOMOLOGY-, vol. 89, no. 5, 1996, pages 1151-1155, XP002311263
- DATABASE CA [Online] CHEMICAL ABSTRACTS SERVICE, COLUMBUS, OHIO, US; PAN, JIAFU ET AL PAN, JIAFU ET AL: "Camphor-containing insectproofing agents" XP002311264 extrait de STN Database accession no. 2000:472690 & CN 1 221 564 CN (SHANGHAI INST. OF INSECTS, CHINESE ACADEMY OF SCIENCES, PEOP. REP. CHI) 31 décembre 1997 (1997-12-31)

## Description

La présente invention concerne l'utilisation d'une nouvelle composition insecticide, notamment pour l'imprégnation de moustiquaires.

Les moustiques sont les vecteurs de nombreuses maladies parasitaires ou virales, telles que par exemple la dengue ou la fièvre jaune, qui sont transmises par des moustiques du genre *Aedes.* Parmi ces maladies parasitaires, le paludisme, transmis par les moustiques du genre *Anopheles,* est un problème particulièrement important de santé publique.

Ainsi, dans l'ensemble des moyens de lutte préconisés contre ces maladies, la lutte anti-vectorielle est une stratégie de choix. Dans le cas du paludisme, la stratégie privilégiée est celle de Moustiquaires Imprégnées d'Insecticides (MII) *(1).*

Actuellement, seuls les insecticides de la classe des pyréthrinoïdes sont recommandés par l'Organisation Mondiale de la Santé (OMS) pour l'imprégnation de moustiquaires *(2),* en raison de :
- leur faible toxicité pour les mammifères,
- leur efficacité, c'est-à-dire la mortalité induite, à faible dose,
- leur coût modéré,
- leur rapidité d'action ou effet Knock-Down (effet KD ou effet choc),
- leur effet irritant, ce qui les rend efficace même si les MII sont trouées (car le moustique est irrité lorsque ces tarses entrent en contact avec l'insecticide).

Aucune autre classe d'insecticides ne possède l'ensemble de ces propriétés (3).

Les pyréthrinoïdes sont des molécules de synthèse dérivées des pyréthrines naturelles, qui sont elles mêmes des esters de l'acide chrysanthémique et de différents alcools. Les pyréthrinoïdes de dernière génération sont soit des molécules alpha-cyanées (type deltaméthrine) soit des molécules non alpha-cyanées (type perméthrine). Dans tous les cas, ces molécules modifient la cinétique des canaux sodium.

Toutefois, il existe un obstacle majeur à l'utilisation des moustiquaires imprégnées d'un insecticide pyréthrinoïde : la résistance des moustiques aux insecticides en général, et aux pyréthrinoïdes en particulier *(4),* notamment via la mutation du gène *kdr (5)* rendent ces protections moins efficaces. Il est donc nécessaire de trouver une alternative aux pyréthrinoïdes tout en conservant des caractéristiques au moins équivalente à celles qu'ils présentent.

Le but de la présente invention est donc de fournir une nouvelle composition insecticide ne contenant pas de pyréthrinoïde, tout en étant au moins aussi efficace que les insecticides pyréthrinoïdes.

Ainsi, la présente invention concerne l'utilisation de produits contenant
- au moins un insecticide non pyréthrinoïde, et
- au moins un insectifuge,
la concentration de l'insecticide dans le produit étant inférieure à sa concentration létale 100 (CL100) lorsqu'il est utilisé seul,
comme produits de combinaison pour une utilisation simultanée, séparée ou étalée dans le temps dans le cadre de la préparation d'une composition insecticide.

Selon un mode de réalisation particulier de l'invention, la concentration d'insectifuge dans la composition insecticide est inférieure à la concentration d'insectifuge procurant un effet insecticide lorsqu'il est utilisé seul.

Selon un autre mode de réalisation particulier de l'invention, la concentration de l'insectifuge dans le produit est inférieure à la concentration de l'insectifuge procurant un effet répulsif maximum lorsqu'il est utilisé seul.

L'invention concerne également l'utilisation d'une composition insecticide comprenant un insecticide non pyréthrinoïde en combinaison avec un insectifuge, caractérisée en ce que la concentration de l'insecticide dans la composition insecticide est inférieure à sa concentration létale 100 (CL100) lorsqu'il est utilisé seul.

Selon un mode de réalisation préféré, l'invention concerne l'utilisation d'une composition insecticide comprenant un insecticide non pyréthrinoïde en combinaison avec un insectifuge, caractérisée en ce que :
- la concentration de l'insecticide dans la composition est inférieure à sa concentration létale 100 (CL100) lorsqu'il est utilisé seul, et
- la concentration d'insectifuge dans la composition insecticide est inférieure à la concentration d'insectifuge procurant un effet insecticide lorsqu'il est utilisé seul.

Selon un autre mode de réalisation préféré de l'invention, la concentration d'insectifuge dans la composition insecticide est inférieure à la concentration d'insectifuge procurant un effet protecteur lorsqu'il est utilisé seul.

On désigne par « insectifuge » un composé pouvant exercer un effet répulsif sur les insectes. En particulier, lorsque ce composé est déposé sur une surface il exerce un effet répulsif sur les insectes à distance de ladite surface, pour une gamme de concentration donnée. En deçà de cette gamme, l'insectifuge n'a plus qu'un effet irritant, qui nécessite pour exercer son action sur les insectes, que ceux-ci soient en contact, notamment par le biais de leurs tarses avec ladite surface. Par ailleurs, au-delà d'une certaine concentration, un insectifuge peut également présenter un effet insecticide, i.e. toxique pour les insectes. Toutefois, de manière préférentielle, l'insectifuge est utilisé à une concentration inférieure à celle procurant un effet insecticide ou toxique dans la composition insecticide selon l'inverition. Ceci permet notamment de diminuer le coût et les éventuels effets indésirables pour l'homme des compositions de l'invention.

L'effet répulsif exercé par un insectifuge peut être mesuré à l'aide du protocole suivant, permettant la détermination du pourcentage de moustiques piquant à travers une surface, telle qu'un textile ou une moustiquaire, traitée avec un insectifuge.

Brièvement, des femelles de moustiques (50) à jeun et âgées de 5 jours, sont introduites dans une cage cubique de 25 cm de côté entourée d'un voilage polyester. Sur l'un des côtés de la cage, le voilage est remplacé par un cadre rigide de 25 x 25 cm sur lequel est fixé l'échantillon de surface non-traitée (témoin), puis traitée. La face de la cage portant échantillon est plaquée pendant un temps de contact de 30 minutes sur la peau rasée d'un lapin (face ventrale). A l'issue du temps de contact, les femelles sont prélevées pour dénombrer celles qui ont pris un repas de sang (femelles gorgées). Le pourcentage de femelles gorgées permet de caractériser l'effet répulsif exercé par un insectifuge donné, à une concentration donnée sur une souche de moustique donnée.

Par conséquent, la concentration d'insectifuge dans la composition ci-dessus est inférieure à celle permettant d'obtenir un « effet protecteur » lorsque l'insectifuge est utilisé seul, c'est-à-dire un pourcentage de femelles gorgées d'environ 0% à environ 20% dans le test ci-dessus.

On désigne par « insecticide » un composé pouvant exercer un effet létal sur les insectes.

On désigne par concentration létale 100 (CL100) la concentration d'un insecticide pour laquelle essentiellement 100% des insectes en contact avec cet insecticide sont tués.

Par analogie, la concentration létale X (CLX) correspond à la concentration d'un insecticide pour laquelle essentiellement X% des insectes en contact avec cet insecticide sont tués.

La détermination de la CL100 se fait habituellement selon le protocole standard de test en tube défini par l'Organisation Mondiale de la Santé (OMS) (6). Brièvement, le test en tube est composé d'un tube d'observation et d'un tube d'exposition (les deux tubes sont amovibles) séparés par un tiroir muni d'une trappe permettant d'obstruer ou de rétablir le passage entre les deux tubes. L'autre extrémité de chaque tube est fermée par un bouchon d'aération muni d'un tamis grillagé. Chaque tube est tapissé, pour les besoins du tests, de papier Whatman (filtre qualitatif standard réf 1002 917 ou, à défaut, le Whatman N°1) maintenu sur les bords par deux bagues métalliques. Le tube d'exposition reçoit du papier imprégné d'insecticide (face imprégnée à l'intérieur) tandis que le tube d'observation reçoit du papier non imprégné (neutre). Pour imprégner les papiers de façon homogène et à la limite de la saturation, 2 ml de solution constituée de 0,66 ml de silicone et de 1,34 ml de solution acétonique sont utilisés. Pour une imprégnation à X mg/m², la quantité de matière active à déposer sur le papier (12 cm x 15 cm soit 0,018 m²) est de 0,018.X mg de matière active (quantité à ajuster en fonction du degré de pureté du produit technique). Cette quantité de matière active est ensuite diluée dans 1,34 ml de solution acétonique auquel on ajoute ensuite 0,66 ml de silicone. Le papier sèche à température ambiante, dans le noir pendant 12 heures avant le début du test. Les concentrations sont exprimées en % de matière active par rapport au volume de silicone sur le papier (car l'acétone est volatile).

A titre d'exemple, un papier imprégné à 1% correspond à 1 gr de matière active pour 99 gr de silicone soit 101,02 ml (densité de 0,98) soit 6,93 mg d'insecticide pour 0,66 ml de silicone (quantité déposée pour un papier imprégné de 0,018 m²) soit 364 mg/m².

De préférence, l'espèce de moustique utilisée pour la détermination des caractéristiques d'un insecticide ou d'un insectifuge est *Ae. aegypti,* moustique vecteur de fièvre jaune et de dengue, dont une souche sensible et une souche résistante aux pyréthrinoïdes (100% homozygote pour le gène kdr) sont disponibles. Avantageusement, ce moustique est plus facile d'élevage que *An. gambiae.*

Pour évaluer la mortalité et l'effet KD, 25 femelles d'*Ae. aegypti* non gorgées et âgées de 2 à 5 jours sont introduites dans le tube d'exposition et laissées en contact pendant une heure à 27°C± 2 et 80% ± 10 d'humidité. Le nombre de moustiques tombés au fond du tube est relevé toutes les 10 minutes. Après 60 minutes, les moustiques sont transférés dans le tube d'observation, avec du jus sucré et mis en incubateur à 27°C± 2 et 80% ± 10 d'humidité. La mortalité est relevée à 24 heures. Le temps au bout duquel 50% des femelles sont knock-down (KDT50) ainsi que son intervalle de confiance sont déterminés au moyen d'une analyse log-probit (7). Quatre tubes sont testés par solutions et chaque test est répété trois fois (méthode du triple essai)

Pour évaluer l'effet irritant ou irritabilité, une femelle d'*Ae. aegypti* non gorgée et âgée de 2 à 5 jours est introduite dans un cône de polyéthylène dont le fond est un papier imprégné. Après un temps d'adaptation de 60 secondes, le temps de premier envol est relevé et enregistré comme temps de premier envol ou « time for First Take-off » (ou FT). Au delà de 256 secondes, si le moustique ne s'est pas envolé, le test est arrêté. Pour chaque test, le comportement de vol de 50 femelles est relevé, et chaque test est répété trois fois. Les femelles sont rangés par classes selon leur temps de premier envol et les fréquences cumulées de premier envol sont utilisées pour calculer le temps au delà duquel 50% des femelles se sont envolées (FT50). Tous les tests se déroulent dans des conditions contrôlées, à 27°C± 2 et 80% ± 10 d'humidité.

Avantageusement, la combinaison entre l'insecticide non pyréthrinoïde et l'insectifuge produit des effets synergiques sur la mortalité et sur l'effet KD. Cela signifie que les effets induits par la composition sont supérieurs à la somme des effets induits par l'insecticide non pyréthrinoïde et l'insectifuge séparément.

De plus, la composition insecticide définie ci-dessus produit un effet additif sur l'effet irritant induit par l'insecticide non pyréthrinoïde et l'insectifuge. Les effets synergiques sur la mortalité et l'effet KD ainsi que l'effet additif sur l'effet irritant donne ainsi à la composition insecticide de l'invention des caractéristiques proches des pyréthrinoïdes.

Avantageusement, la composition insecticide définie ci-dessus est active sur un grand nombre d'espèce de moustiques différents, tels que les moustiques *Ae. aegypti, An. gambiae* ou encore *Culex quinquefasciatus.*

Avantageusement, la composition insecticide définie ci-dessus est active sur les moustiques résistant aux insecticides, notamment ceux résistant aux pyréthrinoïdes.

- Avantageusement, la composition insecticide de l'invention n'est pas toxique pour les mammifères, notamment pour l'homme.

Selon un autre mode de réalisation de l'invention, les produits et la composition insecticide ci-dessus peuvent comprendre plusieurs insecticides et plusieurs insectifuges.

Selon un mode de réalisation particulier de l'invention, la concentration de l'insecticide dans la composition insecticide est comprise d'environ sa CL20 à environ sa CL40 lorsqu'il est utilisé seul.

Selon un mode de réalisation préféré, la concentration de l'insecticide dans la composition insecticide correspond approximativement à sa CL30 lorsqu'il est utilisé seul.

Selon un autre mode de réalisation, le rapport en poids entre la concentration d'insecticide et la concentration d'insectifuge dans la composition insecticide est d'environ 1/100 à environ 1/10.

Avantageusement, les rapports définis ci-dessus permettent d'obtenir les effets synergiques définis ci-dessus les plus importants.

Selon un mode de réalisation particulier, l'insecticide est choisi parmi :
un carbamate, tel que :
   l'alanycarb : S-méthyl-N [[N-méthyl-N-[N-benzyl-N(2-éthoxy-carbonyléthyl) aminothio] carbamoyl] thioacétimidate,
   le bendiocarb: 2,2-diméthyl-1,3-benzodioxol-4yl-méthylcarbamate),
   le carbaryl : (1-naphthyl N-méthylcarbamate,
   l'isoprocarb : 2- (1-méthyléthyl)phényl méthylcarbamate,
   le carbosulfan : 2, 3 dihydro-2, 2-diméthyl-7-benzofuranyl[(dibutylamino) thio] méthylcarbamate,
   le fénoxycarb : éthyl[2- (4-phénoxyphénoxy) éthyl] carbamàte,
   l'indoxacarb : méthyl-7-chloro-2, 3, 4a, 5-tétrahydro-2-[méthoxycarbonyl (-4 trifluorométhoxyphényl)]
   le propoxur : 2-isopropyloxyphénolméthylcarbamate,
   le pirimicarb : 2-diméthylamino-5,6-diméthyl-4-pyrimidinyl-diméthylcarbamate,
   le thidiocarb : diméthyl N, N'(thiobis((méthylimino)carbonoyloxy) bisethanimidiothioate),
   le méthomyl : S-méthylN-((méthylcarbamoyl)oxy) thioacétamidate,
   l'éthiofencarb : 2-((éthylthio)méthyl)phényl méthylcarbamate,
   le fénothiocarb : S-(4-phénoxybutyl)-N,N-diméthyl thiocarbamate,
   le cartap : le chlorhydrate de S, S'- (2-5diméthylamino) triméthylène) bis (thiocarbamate),
   le fénobucarb : 2-sec-butylphénylméthyl carbamate,
   le XMC : 3, 5-diméthylphényl-méthyl carbamate,
   le xylylcarb : 3,4-diméthylphénylméthylcarbamate ;
un organophosphoré tel que :
   le fenitrothion : O,O-diméthylO-(4-nitro-m-tolyl) phosphorothioate,
   le diazinon : O,O-diéthyl-O-(2-isopropyl-6-méthyl-4-pyrimidinyl) phosphorothioate,
   le pyridaphenthion : O-(1,6-dihydro-6-oxo-1-phenylpyrazidin-3-yl) O,O-diéthyl phosphorothioate,
   le pirimiphos-étyl : O,O-diéthyl O-(2- (diéthylamino) 6-méthyl-pyrimidinyl) phosphorothioate,
   le pirimiphos-méthyl : O-[2- (diéthylamino)-6-méthyl-4pyrimidinyl]O,O-diméthyl phosphorothioate,
   l'étrimphos : O-6-éthoxy-2-éthyl-pyrimidin-4-yl-O,O-diméthyl-phosphorothioate,
   fenthion : O,O-diméthyl-O-[-3-méthyl4-(méthylthio)phényl phosphorothioate,
   le phoxim : 2 (diéthoxyphosphinothoyloxyimino)-2-phénylacétonitrile,
   le chlorpyrifos : O,O-diéthyl-O- (3, 5, 6-trichloro-2-pyrinyl) phosphorothioate,
   le chlorpyrifos-méthyl : O,O-diméthyl O-(3, 5,6-trichloro-2-pyridinyl) phosphorothioate,
   le cyanophos :O,O diméthylO-(4cyanophényl) phosphorothioate,
   le pyraclofos : (R, S)[4-chlorophényl)-pyrazol-4-yl]-O-éthyl-S-n-propyl phosphorothioate, l'acéphate :O, S-diméthyl acétylphosphoroamidothioate,
   l'azaméthiphos :S- (6-chloro-2,3-dihydro-oxo-1,3-oxazolo [4, 5-b] pyridin-3-yl méthyl phosphorothioate,
   le malathion : O,O-dimethyl phosphorodithioate ester of diéthyl mercaptosuccinate,
   le téméphos : (O,O'(thiodi-4-1-phénylène)O,O,O,O-tétraméthyl phosphorodithioate,
   le diméthoate : ((O,O-diméthyl S-(n-méthylcarbamoylméthyl) phosphorodithioate,
   le formothion : S [2-formylméthylamino]-2-oxoéthyl]-O,O-diméhyl phosphorodithioate,
   le phenthoate : O,O diméthyl S-(alpha-éthoxycarbonylbenzyl)-phosphorodithioate ; ou
un insecticide ayant un effet stérilisant sur des moustiques adultes tel que :
le 1- (alfa-4- (chloro-alpha- cyclopropylbenzylidenamino-oxy)-p-tolyl)-3-(2, 6-diflourobenzoyl) urée,
   le diflubenzuron : (((3, 5-dichloro-4-(1,1,2,2-tétraflouroéthoxy) phénylamino) carbonyl) 2, 6 diflouro benzamide,
   le triflumuron : 2-Chloro-N-(((4-(triflourométhoxy)phényl)-amino-) carbonyl) benzamide, ou une triazine telle que le N-cyclopropyl-1, 3, 5-triazine-2, 4, 6-triamine.

Selon un autre mode de réalisation particulier, l'insectifuge est choisi parmi :
le N,N-diéthyl-méta-toluamide (DEET),
le N-butyl-N-acétyl-3-éthylamine propionate (35/35®, Merck)
l'ester d'acide 2-(2-hydroxy-éthyl)-pipéridine carboxylique de 1-méthyl-propyl (Bayrepel®, Bayer)
le N,N-diéthylphénylacétamide (DEPA),
le 1-(3-cyclohexen-1-yl-carbonyl)-2-methylpiperine,
la (2 hydroxyméthylcyclohexyl) acide acétique lactone,
le 2-éthyl-1,3-hexandiol,
l'indalone,
le méthylnéodécanamide (MNDA), ou
un insectifuge dérivant d'un extrait de plante telle que le limonène, la citronelle, l'eugénol, le (+) eucamalol (1), le (-)-1-epi-eucamalol,
ou un extrait brut de plantes telles que Eucalyptusmaculata, Vitexrotundifolia, ou Cymbopogan.

Selon un mode de réalisation particulièrement préféré, l'insecticide est le propoxur.

Selon un autre mode de réalisation particulièrement préféré, l'insecticide est le chlorpyrifos-méthyl.

Selon un mode de réalisation particulièrement préféré, l'insectifuge est le DEET.

Selon un autre mode de réalisation particulièrement préféré, l'insectifuge est le N-butyl-N-acétyl-3-éthylamine propionate (35/35®)).

Selon encore un autre mode de réalisation particulièrement préféré, l'insectifuge est l'ester d'acide 2-(2-hydroxy-éthyl)-pipéridine carboxylique de 1-méthyl-propyl (Bayrepel®).

Selon un mode de réalisation particulier, l'insecticide est le propoxur et l'insectifuge est le DEET, le propoxur étant présent à la concentration d'environ 1 à environ 20 mg/m², de préférence environ 7,3 mg/m², et le DEET étant présent à la concentration d'environ 50 à environ 1000 mg/m², notamment d'environ 100 à environ 500 mg/m2, de préférence environ 360 mg/m².

Avantageusement, cette composition présente un effet KD et une mortalité, supérieurs à ce qui peut être mesuré dans les mêmes conditions pour la deltaméthrine, un insecticide pyréthrinoïde de référence, à la concentration de 0,728 mg/m² et une irritabilité au moins égale à ce qui peut être mesuré dans les mêmes conditions pour la deltaméthrine à la concentration mentionnée ci-dessus.

Avantageusement la composition comprenant du propoxur à environ 7,3 mg/m² et du DEET à environ 360 mg/m² présente une mortalité et un effet KD supérieurs dans les mêmes conditions à celui de la deltaméthrine à environ 3,6 mg/m².

L'invention concerne également l'utilisation d'une composition insecticide telle que définie ci-dessus, pour la préparation :
de moustiquaires imprégnées.

Des formulations autres que aérosols et lotions (crèmes, microcapsules) ou des formulations à relargage progressif (poudres mouillables, suspensions concentrées, concentrées liquides, concentrés émulsifiables) et contenant une composition insecticide de l'invention peuvent être préparées à l'aide de techniques bien connues de l'homme de l'art. Notamment, les additifs et excipient nécessaires à la préparation de ces formulations sont particulièrement bien connus de l'homme de l'art. De telles formulations sont particulièrement utiles pour une imprégnation de moustiquaires, soit par trempage dans la formulation, soit par pulvérisation, soit par pré-imprégnation préalable au tissage, ceci afin d'éviter les piqûres de moustiques, notamment de moustiques résistants aux pyréthrinoïdes.

Les procédés de préparation de moustiquaires, soit par ajout de la composition insecticide de l'invention aux produits utilisés pour la synthèse de fibres textiles synthétiques, soit par imprégnation des tissus, ou des fibres de tissus avant tissage, à l'aide de la composition de l'invention, sont bien connues de l'homme de l'art et largement décrits (8).

Avantageusement, l'imprégnation est réalisée de telle sorte que qu'elle résiste à des lavages successifs des tissus imprégnés, ce qui évite d'avoir à ré-imprégner ces tissus.

A cet égard, la présente invention concerne également des moustiquaires, caractérisées en ce qu'ils comprennent une composition insecticide telle que définie ci-dessus.

Les avantages des moustiquaires imprégnées d'insecticides, notamment d'insecticides pyréthrinoïdes, sont bien décrits *(1).* Les moustiquaires selon l'invention sont particulièrement utiles dans les zones infestées de moustiques pour lesquels la résistance aux pyréthrinoïde est répandue.

L'invention concerne également des Produits contenant
- du propoxur, et
- du DEET
le propoxur étant présent à la concentration d'environ 1 à environ 20 mg/m², de préférence environ 7,3 mg/m², et le DEET étant présent à la concentration d'environ 50 à environ 1000 mg/m², notamment d'environ 100 à environ 500 mg/m2, de préférence environ 360 mg/m², comme produits de combinaison pour une utilisation simultanée, séparée ou étalée dans le temps dans le cadre de la préparation :
de moustiquaires imprégnées.

### Description des figures

### Figure 1

### Détermination de l'irritabilité

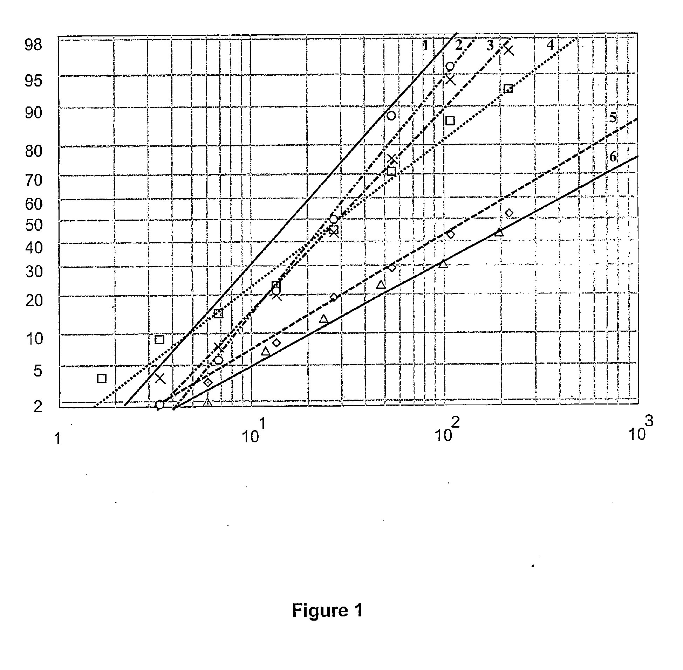

La figure 1 représente le pourcentage de moustiques ayant décollé pour la première fois après un temps d'adaptation de 60 secondes (axe des ordonnées de gauche) en fonction du logarithme du temps écoulé (axe des abscisses, en secondes) pour la deltaméthrine à 5,1 mg/m² (courbe 1), le mélange propoxur 7,28 mg/m² + DEET 364 mg/m² (courbe 2, cercles), le DEET seul à 364 mg/m² (courbe 3, croix), la deltaméthrine à 0,728 mg/m² (courbe 4, carrés), le propoxur seul à 7,28 mg/m2 (courbe 5, losanges) et le témoin imprégné d'une solution de 2 ml d'acétone et de silicone mais sans insecticide (courbe 6, triangles).

### Figure 2

### Détermination de l'effet KD

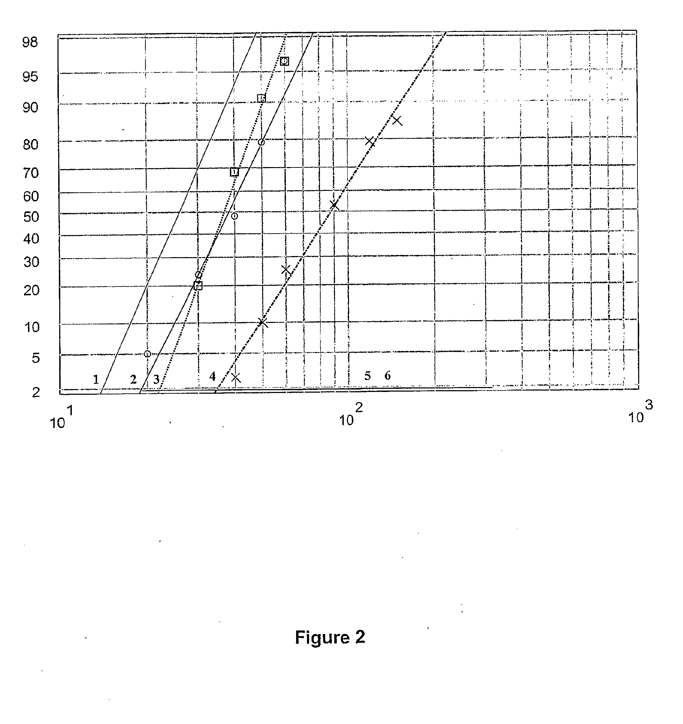

La figure 2 représente le pourcentage (échelle probit) de moustiques assommés (axe des ordonnées) en fonction du logarithme du temps écoulé (axe des abscisses, en minutes) pour la deltaméthrine à 5,1 mg/m² (courbe 1), la deltaméthrine à 3,64 mg/m² (courbe 2, cercles), le mélange 1/50 propoxur 7,28 mg/m² + DEET 364 mg/m² (courbe 3, carrés), le propoxur seul à 7,28 mg/m² (courbe 4, croix), et le DEET seul à 364 mg/m² ainsi que le témoin imprégné d'une solution de 2 ml d'acétone et de silicone mais sans insecticide (courbes 5 et 6).

### Figure 3

### Détermination de la rémanence

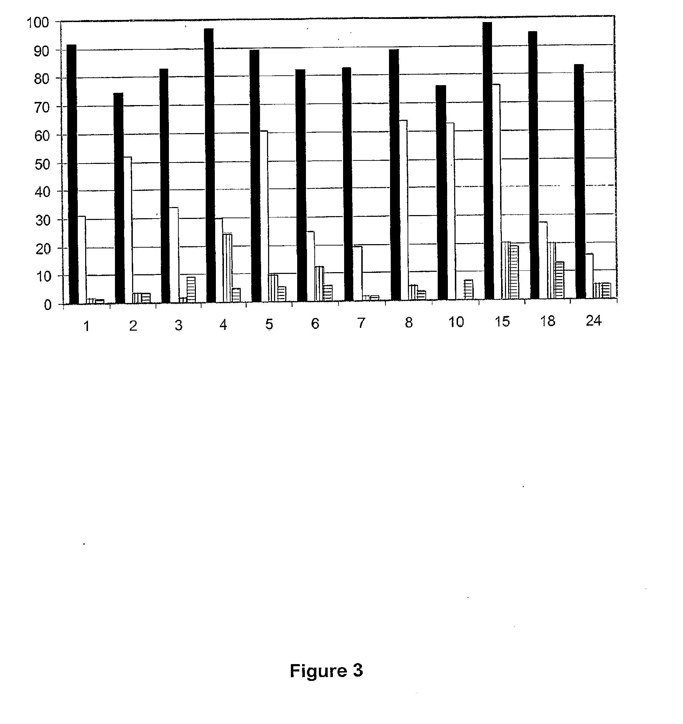

La figure 3 représente le pourcentage de moustiques gorgés (axe des ordonnées) en fonction du temps (axe des abscisses, en jours). Les histogrammes noirs représentent le pourcentage de moustiques gorgés en présence d'un tissu témoin, les histogrammes blancs le pourcentage de moustiques gorgés en présence d'un tissu imprégné d'un insecticide, le pyrimiphos-méthyl, les histogrammes hachurés verticalement le pourcentage de moustiques gorgés en présence d'un tissu imprégné d'un insectifuge, le Bayrepel®, et les histogrammes hachurés horizontalement le pourcentage de moustiques gorgés en présence du mélange de l'insecticide et de l'insectifuge. Plus le pourcentage de moustiques gorgés est faible plus l'effet protecteur est important.

### EXEMPLES

### Exemple 1

Les effets d'un mélange comprenant :
- un insecticide non-pyréthrinoïde, le propoxur, un carbamate ayant une efficacité rapide mais pas d'effet KD (Knock Down, effet choc) et une faible irritabilité, et
- un insectifuge : le N-N-Diethyl-M-Toluamide (DEET), un répulsif d'usage courant,
ont été étudiés sur des femelles *Ae. aegypti* (l'espèce vecteur de la dengue et de la fièvre jaune), âgées de 2 à 5 jours, non gorgées, et comparés à ceux obtenus avec un témoin positif, la deltaméthrine, un insecticide pyréthrinoïde de référence.

Deux souches de femelles *Ae. aegypti* ont été utilisées, une souche sensible aux pyréthrinoïdes, et une souche résistante, homozygote pour le gène kdr, un des gènes responsable de la résistance aux pyréthrinoïdes.

### A. Méthodologie

Trois types de mesures ont été réalisés : la mesure de la mortalité, la mesure de l'effet KD et la mesure de l'irritabilité.

### 1. Mesure de la mortalité et de l'effet KD

Les tests de mesure de la mortalité et de l'effet KD ont été effectués à l'aide de test en tubes (25 femelles par tube, 4 tubes par concentration d'insecticide et/ou d'insectifuge testé, temps de contact 1 heure, lecture du KD de 10 à 60 min, lecture de la mortalité après 24 heures) selon le protocole suivant.

Les tests de contact tarsaux ont été mis en oeuvre à l'aide de papiers filtres (filtre qualitatif standard réf 1002 917 ou, à défaut, le Whatman N°1) imprégnés par des produits de qualité technique selon les recommandations de l'Organisation Mondiale de la Santé (OMS, 6). Les papiers filtres ont été traités à l'aide de solutions d'insecticide et/ou d'insectifuge, diluées dans de l'acétone avec de l'huile de silicone en tant que support. L'imprégnation du papier a été réalisée par 2 ml des solutions à tester, puis le papier a été séché durant 12 h. La mortalité et l'effet KD résultant des contacts tarsaux avec du papier filtre traité ont été mesurés à l'aide des tubes tests pour moustiques adultes de l'OMS. Les concentrations ont été exprimées en poids d'ingrédient actif par rapport à la surface de papier filtre traité. Des lots de 25 femelles *Ae. aegypti* n'ayant pas été nourries de sang, âgées de 2 à 5 jours, ont été introduits dans des tubes de rétention et maintenus pendant 1 h (temps d'adaptation) à 27 ± 2°C et 80 ± 10 % d'humidité. Les moustiques ont alors été transférés dans le tube d'exposition, placé sous lumière atténué pendant 1 h. A fin de comparaison avec les pyréthrinoïdes, qui sont des insecticides à action rapide, le nombre de moustiques assommés au fond des tubes a été compté à intervalles réguliers de 10 min. Le temps pour lequel 50% des moustiques sont assommés (KDT₅₀) et son intervalle de confiance à 95% ont alors été déterminés à l'aide de la méthode log-probit (7). La mortalité a été enregistrée après 24 heures d'exposition. Chaque concentration a été testée quatre fois et chaque test a été répété trois fois avec différents lots d'insectes afin de prendre en compte la variabilité inter-lots.

### 2. Mesure de l'irritabilité

Les tests d'irritabilité ont été effectués (une femelle dans un cône en contact avec la surface imprégnée, lecture du temps de premier envol après la 1ère minute écoulée, 50 femelles par test) selon le protocole suivant.

Des femelles femelles *Ae. aegypti* n'ayant pas été nourries de sang, âgées de 2 à 5 jours, ont été introduites individuellement dans des cônes de plastique appliqués à des papiers filtres traités. Après un temps d'adaptation d'exactement 60 secondes, la durée écoulée entre le premier atterrissage et le décollage suivant a été définie comme étant « la durée de premier décollage » (FT). L'observation n'a pas été prolongée pour les rares moustiques n'ayant pas décollés après 256 secondes. Pour chaque test, 50 moustiques ont été testés individuellement. Un programme informatique simple utilisant l'horloge interne d'un ordinateur portable a été implémenté pour effectuer ce test et pour analyser les résultats en groupant les moustiques en classes de durée de premier décollage. La durée pour laquelle 50% des moustiques ont quitté la surface traitée (durée de premier décollage médiane, FT₅₀) et son intervalle de confiance à 95% ont alors été déterminés à l'aide de la méthode log-probit..

### B. Résultats

Préalablement aux mesures, la concentration létale 30 (CL30), concentration d'insecticide pour laquelle 30% des moustiques sont tués, a été déterminée pour le propoxur (7,28 mg/m²). Cette concentration est la plus favorable pour la mise en évidence d'interactions entre l'insecticide et l'insectifuge. La concentration létale 30 (CL30) a également été déterminée pour la deltaméthrine (0,728 mg/m²) afin de pourvoir comparer l'effet KD et l'effet irritant de ces deux insecticides à la concentration tuant le même pourcentage d'insectes.

L'irritabilité a été déterminée à la CL30 pour chaque insecticide, propoxur et deltaméthrine, individuellement, pour le DEET seul à la concentration de 364 mg/m², ainsi que pour le mélange propoxur (CL30, 7,28 mg/m²) + DEET (364 mg/m²) (rapport 1/50) **(****Figure 1**). L'irritabilité a également été déterminée à la CL100 de la deltaméthrine, afin de comparer les caractéristiques de la composition insecticide avec celles de la deltaméthrine à la fois à la CL30 et à la CL100.

L'effet KD et la mortalité ont été déterminés à la CL30 pour chaque insecticide, propoxur et deltaméthrine, individuellement, pour le DEET seul à la concentration de 364 mg/m², ainsi que pour le mélange propoxur (CL30, 7,28 mg/m²) + DEET (364 mg/m²) (rapport 1/50) **(****Figure 2****).** L'effet KD a également été déterminé à la CL100 de la deltaméthrine, afin de comparer les caractéristiques de la composition insecticide avec celles de la deltaméthrine à la fois à la CL30 et à la CL100.

Les résultats obtenus sont rassemblés dans le Tableau 1, ci-dessous :

**Tableau 1 : délai de premier décollage, effet KD et mortalité de femelles Aedes aegypti, souche sensible aux pyréthrinoïdes, en présence d'un insecticide, d'un insectifuge et du mélange des deux sur papiers imprégnés.**

| **Composés testés** | **Irritabilité** | | **Effet KD** | | **Mortalité** |
|---|---|---|---|---|---|
| | FT₅₀ (s) | 95%IC¹ | KDT₅₀ (min) | 95%IC¹ | |
| Propoxur 7,28 mg/m² | 133,9 | 108,8 - 172,3 | 86,9 | 82,9 - 91,3 | 34% (300) |
| DEET 364 mg/m² | 24,2 | 21,9 - 26,8 | - | - | 0% (300) |
| Propoxur 7,28 mg/m² + DEET 364 mg/m² (rapport 1/50) | 21,5 | 18,7 - 24,6 | 36,6 | 35,7 - 37,4 | 96% (300) |
| Pyréthrinoïde de référence : deltaméthrine 0,728 mg/m² | 23,9 | 21,2 - 27 | 52,8 | 51,4 - 54,38 | 34% (300) |
| Pyréthrinoïde de référence : deltamëthrine à 5,1 mg/m² | 16,9 | 14,2 - 20,4 | 23,5 | 20,2 - 27,3 | 100% (200) |

| | | | | | |
|---|---|---|---|---|---|
| ¹95%IC = intervalle de confiance à 95% - () nombre de moustiques testés - n.m. non mesuré | | | | | |

Les résultats indiquent :
- un effet additif du mélange propoxur 7,28 mg/m² +DEET 364 mg/m² sur l'irritabilité, l'irritabilité du mélange étant supérieure à celle obtenue pour la deltaméthrine à 0,728 mg/m² et proche de celle obtenue pour la deltaméthrine à la CL100 (5,1 mg/m²) ;
- un effet synergique du mélange propoxur + DEET sur l'effet KD, effet d'autant plus inattendu que le DEET ne présente en lui-même aucun effet KD ;
- un effet synergique du mélange propoxur + DEET sur la mortalité, effet d'autant plus inattendu que le DEET n'a pas d'effet insecticide en lui-même ;

La composition insecticide obtenue (insecticide non pyréthrinoïde + répulsif) permet donc de reproduire les caractéristiques des insecticides pyréthrinoïdes (notamment en ce qui concerne l'irritabilité et l'effet KD) tout en présentant des effets équivalent ou supérieurs à ceux obtenus avec des insecticides pyréthrinoides sensiblement aux mêmes doses.

Les résultats obtenus pour le mélange décrit ci-dessus ont également été validés avec une souche résistante aux pyréthrinoïdes d'*Ae. aegypti* avec les mêmes procédures expérimentales. Ces résultats sont présentés dans le tableau 2 ci-dessous :

**Tableau 2 : délai de premier décollage, effet KD et mortalité de femelles Aedes aegypti, souche résistante aux pyréthrinoïdes, en présence d'un insecticide, d'un insectifuge et du mélange des deux sur papiers imprégnés.**

| **Composés testés** | **Irritabilité** | | **Effet KD** | | **Mortalité** |
|---|---|---|---|---|---|
| | FT₅₀ (s) | 95%IC¹ | KDT₅₀ (min) | 95%IC¹ | |
| Pyréthrinoïde de référence : deltamethrine à 5,1 mg/m² | 34,98 | 28,3 - 43,7 | - | - | 8% (200) |
| Propoxur 3,64mg/m² | n.m. | n.m. | 88,4 | 77,6 - 114 | 34,5% (275) |
| DEET 364 mg/m² | n.m. | n.m. | - | - | 0% (300) |
| Propoxur 3,64 mg/m² + DEET 364 mg/m² (rapport 1/100) | 17,3 | 14,3 - 21,5 | 41,5 | 40,6 - 42,4 | 94,6% (300) |

| | | | | | |
|---|---|---|---|---|---|
| ¹95%IC = intervalle de confiance à 95% - ( ) nombre de moustiques testés - n.m. non mesuré NB : par rapport à la souche sensible, la concentration de propoxur a été abaissée pour la souche résistante afin de prendre en compte une sensibilité à cet insecticide plus marquée ; en effet la CL30 est atteinte pour 3,64 mg/m² de propoxur pour la souche résistante et pour 7,28 mg/m² pour la souche sensible. | | | | | |

On constate donc que le mélange insecticide non pyréthrinoïde + répulsif de l'invention (propoxur + DEET) permet de reproduire les effets d'un insecticide de type pyréthrinoïde, et ce, même sur des insectes résistants aux pyréthrinoïdes, ce phénomène étant notamment dû à un effet synergique inattendu de cette association sur la mortalité et sur l'effet KD.

Les résultats obtenus pour le mélange décrit ci-dessus ont également été validés pour d'autres espèces de moustiques, à savoir *Anopheles gambiae* et *Culex quinquefasciatus* avec les mêmes procédures expérimentale.

De même, les effets décrits ci-dessus pour le mélange propoxur + DEET ont également pu être observés sur des moustiques *Anopheles gambiae,* mutés pour le gène *kdr,* résistants aux pyréthrinoïdes, ainsi que sur des moustiques *Culex quinquefasciatus* résistants aux insecticides du type organophosphorés et carbamates.

Par ailleurs, des résultats semblables ont pu être obtenus avec un autre insecticide, le chlorpyrifos-méthyl (Dow Agrosciences), ainsi qu'en utilisant deux autres insectifuges, le 35/35® (Merck) et le Bayrepel® (Bayer).

Enfin, tous ces résultats ont pu être validés par imprégnation de moustiquaires à l'aide des tests en cône définis par l'OMS (*9*) et par des tests de simulations de conditions naturelles (« tests en tunnel », *10*).

### Exemple 2

Les Inventeurs ont également étudié la rémanence d'un mélange selon l'invention sur un tissu imprégné.

### A. Méthodologie

L'insecticide utilisé dans cette étude est un organophosphoré, le pyrimiphos-méthyl (O-[2-(diethylamino)-6-methyl-4-pyrimidinyl] O,O-dimethyl-phosphorothioate), et l'insectifuge est le Bayrepel® (ou KBR 3023, ester d'acide 2-(2-hydroxy-éthyl)-pipéridine carboxylique de 1-méthyl-propyl).

Conformément au protocole de test d'insectifuges décrit précédemment, des carrés de tissu 100% coton de 25 cm de côté troués en leur centre d'un cercle de 5cm de diamètre ont été utilisés. Le pouvoir de rétention de ce tissu est de 486,6 mg/m², on applique donc sur chaque échantillon de 25,56 mL d'une formulation de pyrimiphos-méthyl (concentré émulsionné à 1000 mg/m²), de KBR 3023 (répulsif à 10000 mg/m²), ou du mélange des deux.

50 femelles à jeun d'*Ae. aegypti* souche sensible à jeun et âgés de 5 à 10 jours sont introduites dans une cage (25 cm x 25 cm) constituée d'un cadre rigide métallique entouré d'un voilage de polyester sur trois côtés et du carré de tissu sur le quatrième côté. La cage est plaquée sur le ventre préalablement rasé d'un lapin côté tissu. Le contact est alors maintenu pendant 30 minutes à l'issu desquelles la cage est retirée. Il est alors procédé à un comptage des femelles qui se sont gorgées. Ce test est réalisé en parallèle sur 4 lapins : un témoin, un pour l'insecticide seul, un pour l'insectifuge seul et un pour le mélange.

Cette opération est répétée régulièrement sur plusieurs jours sans ré-imprégnation du tissu afin d'estimer l'efficacité et la rémanence des produits d'imprégnation.

L'efficacité du mélange ainsi que sa rémanence sont estimées par la détermination du pourcentage de moustiques qui se sont gorgés par rapport à l'insecticide seul ou à l'insectifuge seul, au cours du temps.

### B. Résultats

Les résultats obtenus sont présentés dans la **Figure 3**. On observe, en particulier, que l'efficacité du mélange est supérieure à celle de l'insecticide seul ou de l'insectifuge seul. Par ailleurs, l'effet protecteur du mélange se maintient au moins pendant 24 jours. Ainsi, au 24^{ème} jour le mélange confère encore une efficacité de protection de 93% par rapport au témoin.

### REFERENCES

1. D'Alessandro U. and Coosemans M., 1997. Concerns on long-term efficacy of an insecticide-treated bednet programme on child mortality. Parasitology Today, 13: 124-125.
2. Zaim M., Aitio A. and Nakashima N. 2000. Safety of pyrethroid-treated nets. Medical and Veterinary Entomology, 14: 1-5.
3. Tomlin C. D. S., 2000. The Pesticide Manual, a World Compendium, 12th Ed. British Crop Protection Council, London, United Kingdom.
4. Sina B.J. and Aultman S.K., 2001. Resisting resistance. Trends in Parasitology, 17: 305-306.
5. Martinez-Torres D., ChandreF., Williamson M. S., Darriet F., Bergé J. B., Devonshire A. L., Guillet P., Pasteur N. and Pauron D., 1998. Molecular characterization of pyrethroid knockdown resistance (kdr) in the major malaria vector Anopheles gambiae s.s. Insect Mol. Biol., 7: 179-184.
6. [WHO] World Health Organisation. 1998b. Test procedures for insecticide resistance monitoring in malaria vectors, bio-efficacy and persistence of insecticides ion treated surfaces. WHO document WHO/CDS/MAL/98.12. Geneva, Switzerland.
7. Raymond M., Prato G. and Ratsira D., 1997. Probit and logit analysis program version 2.0. Praxème: R&D.
8. Guillet P., 2001. Insecticide-treated nets in Africa: where do we stand ? Africa Health, Malaria Supplement, 23(6): 20-23.
9. [WHO] World Health Organization. 1998b. Test procedures for insecticide resistance monitoring in malaria vectors, bio-efficacy and persistence of insecticides ion treated surfaces. WHO document WHO/CDS/MAL/98.12. Geneva, Switzerland.
10. Chandre, F., F. Darriet, S. Duchon, L. Finot, S. Manguin, P. Carnevale and P. Guillet. 2000. Modifications of pyrethroid effects associated with Kdr mutation in Anopheles gambiae. Med. Vet. Entomol. 14: 81-88.

## Revendications

1. Utilisation comme composition insecticide synergique contre les moustiques d'un produit contenant
- au moins un insecticide non pyréthrinoïde choisi parmi un carbamate tel que l'alanycarb :
S-methyl-N [[N-méthyl-N-[N-bénzyl-N (2-éthoxy- carbonyléthyl) aminothio] carbamoyl] thioacétimidate,
le bendiocarb : 2,2-diméthyl-1, 3-benzodioxol-4yl-méthylcarbamate),
le carbaryl : (1-naphthyl N-méthylcarbamate,
l'isoprocarb : 2- (1-méthyléthyl) phényl méthylcarbamate,
le carbosulfan : 2, 3 dihydro-2, 2-diméthyl-7-benzofuranyl[(dibutylamino) thio] méthylcarbamate,
le fénoxycarb: éthyl[2- (4-phénoxyphénoxy) éthyl] carbamate,
l'indoxacarb : méthyl-7-chloro-2, 3, 4a, 5-tétrahydro-2-[méthoxycarbonyl (-4 trifluorométhoxyphényl)]
le propoxur : 2-isopropyloxyphénolméthylcarbamate,
le pirimicarb : 2-diméthylamino-5, 6-diméthyl-4-pyrimidinyl- diméthylcarbamate,
le thidiocarb : diméthyl N, N'(thiobis((méthylimino)carbonoyloxy) bisethanimidiothioate),
le méthomyl : S-méthylN- ((méthylcarbamoyl)oxy) thioacétamidate,
l'éthiofencarb : 2-((éthylthio)méthyl)phényl méthylcarbamate,
le fénothiocarb : S-(4-phénoxybutyl)-N,N-diméthyl thiocarbamate,
le cartap : le chlorhydrate de S, S'- (2-Sdiméthylamino) triméthylène) bis (thiocarbamate),
le fénobucarb : 2-sec-butylphénylméthyl carbamate,
le XMC : 3, 5-diméthylphényl-méthyl carbamate,
le xylylcarb : 3,4-diméthylphénylméthylcarbamate ;
un organophosphoré tel que :
le fenitrothion : O,O-diméthylO- (4-nitro-m-tolyl) phosphorothioate,
le diazinon : O,O-diéthyl-O-(2-isopropyl-6-méthyl-4-pyrimidinyl) phosphorothioate,
le pyridaphenthion : O-(1,6-dihydro-6-oxo-1-phenylpyrazidin-3-yl) O,O-diéthyl phosphorothioate,
le pirimiphos-étyl : O,O-diéthyl O- (2- (diéthylamino) 6-méthyl-pyrimidinyl) phosphorothioate,
le pirimiphos-méthyl : O- [2- (diéthylamino)-6-méthyl-4pyrimidinyl] O, O-diméthyl phosphorothioate,
l'étrimphos : O-6-éthoxy-2-éthyl-pyrimidin-4-yl-O, O-diméthyl-phosphorothioate,
fenthion : O,O-diméthyl-O-[-3-méthyl4-(méthylthio) phényl phosphorothioate,
le phoxim : 2 (diéthoxyphosphinothoyloxyimino)-2-phénylacétonitrile,
le chlorpyrifos : O,O-diéthyl-O- (3, 5, 6-trichloro-2-pyrinyl) phosphorothioate,
le chlorpyrifos-méthyl : O, O-diméthyl O- (3, 5,6-trichloro-2-pyridinyl) phosphorothioate,
le cyanophos :O, O diméthylO- (4cyanophényl) phosphorothioate,
le pyraclofos : (R, S) [4-chlorophényl)-pyrazol-4-yl]-O-éthyl-S-n-propyl phosphorothioate,
l'acéphate :O, S-diméthyl acétylphosphoroamidothioate,
l'azaméthiphos :S- (6-chloro-2, 3-dihydro-oxo-1,3-oxazolo [4, 5-b] pyridin-3-yl méthyl phosphorothioate,
le malathion : O,O-dimethyl phosphorodithioate ester of diéthyl mercaptosuccinate,
le téméphos : (O,O' (thiodi-4-1-phénylène) O,O,O,O-tétraméthyl phosphorodithioate,
le diméthoate : ((O,O-diméthyl S-(n-méthylcarbamoylméthyl) phosphorodithioate,
le formothion : S [2-formylméthylamino]-2-oxoéthyl]-O, O-diméhyl phosphorodithioate,
le phenthoate : O, O dimethyl S- (alpha-éthoxycarbonylbenzyl)-phosphorodithioate ; ou
un insecticide ayant un effet stérilisant sur des moustiques adultes tel que :
le 1- (alfa-4- (chloro-alpha- cyclopropylbenzylidenamino-oxy)-p-tolyl)-3-(2, 6-diflourobenzoyl) urée,
le diflubenzuron : (((3, 5-dichloro-4- (1, 1, 2,2-tétraflouroéthoxy) phénylamino) carbonyl) 2, 6 diflouro benzamide,
le triflumuron : 2-Chloro-N- (((4- (triflourométhoxy) phényl)-amino-) carbonyl) benzamide, ou une triazine telle que le N-cyclopropyl-1, 3, 5-triazine-2, 4, 6-triamine, et
- au moins un insectifuge choisi parmi le N,N-diéthyl-méta-toluamide (DEET),
le N-butyl-N-acétyl-3-éthylamine propionate (35/35®, Merck),
l'ester d'acide 2-(2-hydroxy-éthyl)-pipéridine carboxylique de 1-méthyl-propyl (Bayrepel®, Bayer)
le N,N-diéthylphénylacétamide (DEPA),
le 1-(3-cyclohexen-1-yl-carbonyl)-2-methylpiperine,
la (2 hydroxyméthylcyclohexyl) acide acétique lactone,
le 2-éthyl-1, 3-hexandiol,
l'indalone,
le méthylnéodécanamide (MNDA), ou
un insectifuge dérivant d'un extrait de plante telle que le limonène, la citronelle, l'eugénol, le (+) eucamalol (1), le (-)-1-epi-eucamalol,
ou un extrait brut de plantes telles que Eucalyptusmaculata, Vitexrotundifolia, ou Cymbopogan,
la concentration de l'insecticide dans le produit étant inférieure à sa concentration létale 100 (CL100) lorsqu'il est utilisé seul, et la concentration de l'insectifuge dans le produit étant inférieure à la concentration de l'insectifuge procurant un effet répulsif maximum lorsqu'il est utilisé seul,
comme produits de combinaison pour une utilisation simultanée, séparée ou étalée dans le temps.

2. Utilisation d'une composition insecticide selon la revendication 1, **caractérisée en ce que** la concentration de l'insecticide dans la composition insecticide est comprise de sa CL20 à sa CL40 lorsqu'il est utilisé seul.

3. Utilisation d'une composition insecticide selon la revendication 2, **caractérisée en ce que** la concentration de l'insecticide dans la composition insecticide correspond à sa CL30 lorsqu'il est utilisé seul.

4. Utilisation d'une composition insecticide selon l'une des revendications 1 à 3, **caractérisée en ce que** le rapport en poids entre la concentration d'insecticide et la concentration d'insectifuge dans ladite composition insecticide est de 1/100 à 1/10.

5. utilisation d'une composition insecticide selon l'une des revendications 1 à 4, dans laquelle l'insecticide est le propoxur.

6. Utilisation d'une composition insecticide selon l'une des revendications 1 à 4, dans laquelle l'insecticide est le chlorpyrifos-methyl.

7. Utilisation d'une composition insecticide selon l'une des revendications 1 à 6, dans laquelle l'insectifuge est le DEET.

8. Utilisation d'une composition insecticide selon l'une des revendications 1 à 6, dans laquelle l'insectifuge est le N-butyl-N-acétyl-3-éthylamine propionate (35/35®, Merck).

9. Utilisation d'une composition insecticide selon l'une des revendications 1 à 6, dans laquelle l'insectifuge est l'ester d'acide 2-(2-hydroxy-éthyl)-pipéridine carboxylique de 1-méthyl-propyl (Bayrepel®, Bayer).

10. Utilisation d'une composition insecticide synergique telle que définie dans l'une des revendications 1 à 9, pour la préparation de moustiquaires imprégnées de ladite composition.

## Patentansprüche

1. Verwendung eines Produkts als synergistische insektizide Zusammensetzung gegen Mücken, enthaltend:
- mindestens ein nicht pyrethrinoides Insektizid, ausgewählt aus einem Carbamat, wie zum Beispiel Alanycarb:
S-Methyl-N[[N-methyl-N-[N-benzyl-N(2-ethoxy-carbonylethyl)aminothio]carbamoyl]thioacetimidat,
Bendiocarb: 2,2-Dimethyl-1,3-benzodioxol-4yl-methylcarbamat,
Carbaryl: (1-Naphthyl-N-methylcarbamat,
Isoprocarb: 2-(1-Methylethyl)phenylmethylcarbamat,
Carbosulfan: 2,3-Dihydro-2,2-dimethyl-7-benzofuranyl[(dibutylamino)thio]methylcarbamat,
Fenoxycarb: Ethyl[2-(4-phenoxyphenoxy)ethyl]carbamat,
Indoxacarb: Methyl-7-chlor-2,3,4a,5-tetrahydro-2-[methoxycarbonyl(-4-trifluormethoxyphenyl)],
Propoxur: 2-Isopropyloxyphenolmethylcarbamat,
Pirimicarb: 2-Dimethylamino-5,6-dimethyl-4-pyrimidinyl-dimethylcarbamat,
Thidiocarb: Dimethyl-N,N'(thiobis((methylimino)carbonyloxy)bis(ethanimidiot hioat),
Methomyl: S-Methyl-N-((methylcarbamoyl)oxy)thioacetamidat,
Ethiofencarb: 2-((Ethylthio)methyl)phenylmethylcarbamat,
Fenothiocarb: S-(4-Phenoxybutyl)-N,N-dimethylthiocarbamat,
Cartap: das Hydrochlorid von S,S'-(2-5-Dimethylamino)trimethylen)bis(thiocarbamat),
Fenobucarb: 2-sec-Butylphenylmethylcarbamat,
XMC: 3,5-Dimethylphenylmethylcarbamat,
Xylylcarb: 3,4-Dimethylphenylmethylcarbamat;
eine phospororganische Verbindung, wie zum Beispiel:
Fenitrothion: O,O-Dimethyl-O-(4-nitro-m-tolyl)phosphorothioat,
Diazinon: O,O-Diethyl-O-(2-isopropyl-6-methyl-4-pyrimidinyl)phosphorothioat,
Pyridaphenthion: O-(1,6-Dihydro-6-oxo-1-phenylpyrazidin-3-yl)-O,O-diethylphosphorothioat,
Pirimiphos-ethyl: O,O-Diethyl-O-(2-(diethylamino)-6-methyl-pyrimidinyl)phosphorothioat,
Pirimiphos-methyl: O-[2-(Diethylamino)-6-methyl-4-pyrimidinyl]-O,O-dimethylphosphorothioat,
Tetrimphos: O-6-Ethoxy-2-ethylpyrimidin-4-yl-O,O-dimethyl-phosphorothioat,
Fenthion: O,O-Dimethyl-O-[-3-methyl-4-(methylthio)phenylphosphorothioat,
Phoxim: 2-(Diethoxythiophosphoryloxyimino)-2-phenylacetonitril,
Chlorpyrifos: O,O-Diethyl-O-(3,5,6-trichlor-2-pyrinyl)phosphorothioat,
Chlorpyrifos-methyl: O,O-Dimethyl-O-(3,5,6-trichlor-2-pyridinyl)phosphorothioat,
Cyanophos: O,O-Dimethyl-O-(4-cyanophenyl)phosphorothioat,
Pyraclofos: (R,S)[4-Chlorphenyl)-pyrazol-4-yl]-O-ethyl-S-n-propylphosphorothioat,
Acephat: O,S-Dimethylacetylphosphoroamidothioat,
Azamethiphos: S-(6-Chlor-2,3-dihydro-oxo-1,3-oxazolo[4,5-b]pyridin-3-yl-methylphosphorothioat,
Malathion: O,O-Dimethylphosphorodithioat von Diethylmercaptosuccinat,
Temephos: (O,O'-(Thiodi-4-1-phenylen)-O,O,O,O-tetramethylphosphorodithioat,
Dimethoat: ((O,O-Dimethyl-S-(n-methylcarbamoylmethyl)phosphorodithioat,
Formothion: S-[2-Formylmethylamino]-2-oxoethyl]-O,O-dimethylphosphorodithioat,
Phenthoat: O,O-Dimethyl-S-(alpha-ethoxycarbonylbenzyl)-phosphorodithioat; oder
ein Insektizid, das eine sterilisierende Wirkung auf erwachsene Mücken aufweist, wie zum Beispiel:
1-((Alfa-4-(chlor-alpha-cyclopropylbenzylidenamino-oxy)-p-tolyl)-3-(2,6-difluorbenzoyl)harnstoff,
Diflubenzuron: (((3,5-Dichlor-4-(1,1,2,2-tetrafluorethoxy)phenylamino)carbonyl)-2,6-difluorbenzamid,
Triflumuron: 2-Chlor-N-(((4-(trifluormethoxy)phenyl)amino)carbonyl)benzamid,
oder ein Triazin, wie zum Beispiel N-Cyclopropyl-1,3,5-triazin-2,4,6-triamin und
- mindestens ein Insektenabwehrmittel, ausgewählt aus N,N-Diethyl-meta-toluamid (DEET),
N-Butyl-N-acetyl-3-ethylaminpropionat (35/35®, Merck),
1-Methylpropyl-2-(2-hydroxyethyl)-piperidincarboxylat (Bayrepel®, Bayer)
N,N-Diethylphenylacetamid (DEPA),
1-(3-Cyclohexen-1-yl-carbonyl)-2-methylpiperin,
(2-Hydroxymethylcyclohexyl)-essigsäurelacton,
2-Ethyl-1,3-hexandiol,
Indalon,
Methylneodecanamid (MNDA),
oder ein Insektenabwehrmittel, das von einem Pflanzenextrakt abgeleitet ist, wie zum Beispiel Limonen, Citronella, Eugenol, (+)Eucamalol (1), (-)-1-Epi-eucamalol,
oder einem Rohextrakt von Pflanzen, wie zum Beispiel Eucalyptus maculata, Vitex rotundifolia oder Cymbopogan,
wobei die Konzentration des Insektizids in dem Produkt unterhalb ihrer tödliche Konzentration 100 (LC100) liegt, wenn es allein verwendet wird, und die Konzentration des Insektenabwehrmittels in dem Produkt unterhalb der Insektenabwehrmittelkonzentration liegt, die für eine maximale abwehrende Wirkung sorgt, wenn es allein verwendet wird,
als Kombinationsprodukte für eine gleichzeitige, getrennte oder zeitlich gestaffelte Verwendung.

2. Verwendung einer insektiziden Zusammensetzung nach Anspruch 1, **dadurch gekennzeichnet, dass** die Konzentration des Insektizids in der insektiziden Zusammensetzung im Bereich ihrer LC20 bis ihrer LC40 liegt, wenn es allein verwendet wird.

3. Verwendung einer insektiziden Zusammensetzung nach Anspruch 2, **dadurch gekennzeichnet, dass** die Konzentration des Insektizids in der insektiziden Zusammensetzung ihrer LC30 entspricht, wenn es allein verwendet wird.

4. Verwendung einer insektiziden Zusammensetzung nach einem der Ansprüche 1 bis 3, **dadurch gekennzeichnet, dass** das Gewichtsverhältnis zwischen der Insektizidkonzentration und der Insektenabwehrmittelkonzentration in der insektiziden Zusammensetzung bei 1/100 bis 1/10 liegt.

5. Verwendung einer insektiziden Zusammensetzung nach einem der Ansprüche 1 bis 4, wobei das Insektizid Propoxur ist.

6. Verwendung einer insektiziden Zusammensetzung nach einem der Ansprüche 1 bis 4, wobei das Insektizid Chlorpyrifos-methyl ist.

7. Verwendung einer insektiziden Zusammensetzung nach einem der Ansprüche 1 bis 6, wobei das Insektenabwehrmittel DEET ist.

8. Verwendung einer insektiziden Zusammensetzung nach einem der Ansprüche 1 bis 6, wobei das Insektenabwehrmittel N-Butyl-N-acetyl-3-ethylaminpropionat (35/35®, Merck) ist.

9. Verwendung einer insektiziden Zusammensetzung nach einem der Ansprüche 1 bis 6, wobei das Insektenabwehrmittel 1-Methylpropyl-2-(2-hydroxyethyl)-piperidincarboxylat (Bayrepel®, Bayer) ist.

10. Verwendung einer synergistischen insektiziden Zusammensetzung wie in einem der Ansprüche 1 bis 9 definiert, zur Herstellung eines Mückennetzes, das mit der Zusammensetzung imprägniert ist.

## Claims

1. Use as a synergistic insecticide composition against mosquitoes of a product containing
- at least one non-pyrethroid insecticide chosen from a carbamate such as alanycarb:
S-methyl-N [[N-methyl-N-[N-benzyl-N (2-ethoxy-carbonylethyl) aminothio] carbamoyl] thioacetimidate,
bendiocarb: 2,2-dimethyl-1,3-benzodioxol-4yl-methylcarbamate,
carbaryl: 1-naphthyl N-methylcarbamate,
isoprocarb: 2- (1-methylethyl) phenyl methylcarbamate,
carbosulphan: 2,3 dihydro-2,2-dimethyl-7-benzofuranyl[(dibutylamino) thio] methylcarbamate,
fenoxycarb: ethyl[2- (4-phenoxyphenoxy) ethyl] carbamate,
indoxacarb: methyl-7-chloro-2,3,4a,5-tetrahydro-2-[methoxycarbonyl (-4 trifluoromethoxyphenyl)]
propoxur: 2-isopropyloxyphenolmethylcarbamate,
pirimicarb: 2-dimethylamino-5,6-dimethyl-4-pyrimidinyl- dimethylcarbamate,
thidiocarb: dimethyl N,N'(thiobis((methylimino)carbonoyloxy) bisethanimidiothioate),
methomyl: S-methylN- ((methylcarbamoyl) oxy) thioacetamidate,
ethiofencarb: 2-((ethylthio)methyl)phenyl methylcarbamate,
fenothiocarb: S-(4-phenoxybutyl)-N,N-dimethyl thiocarbamate,
cartap: S, S'- (2-5dimethylamino) trimethylene) bis (thiocarbamate) hydrochloride,
fenobucarb: 2-sec-butylphenylmethyl carbamate,
XMC: 3, 5-dimethylphenyl-methyl carbamate,
xylylcarb: 3,4-dimethylphenylmethylcarbamate;
an organophosphate such as:
fenitrothion: O,O-dimethylO- (4-nitro-m-tolyl) phosphorothioate,
diazinon: O,O-diethyl-O-(2-isopropyl-6-methyl-4-pyrimidinyl) phosphorothioate,
pyridaphenthion: O-(1,6-dihydro-6-oxo-1-phenylpyrazidin-3-yl) O,O-diethyl phosphorothioate,
pirimiphos-ethyl: O,O-diethyl O- (2- (diethylamino) 6-methyl-pyrimidinyl) phosphorothioate,
pirimiphos-methyl: O- [2- (diethylamino)-6-methyl-4pyrimidinyl] O,O-dimethyl phosphorothioate,
etrimphos: O-6-ethoxy-2-ethyl-pyrimidin-4-yl-O, O-dimethyl-phosphorothioate,
fenthion: O,O-dimethyl-O-[-3-methyl4-(methylthio) phenyl phosphorothioate,
phoxim: 2 (diethoxyphosphinothoyloxyimino)-2-phenylacetonitrile,
chlorpyrifos: O,O-diethyl-O- (3, 5, 6-trichloro-2-pyrinyl) phosphorothioate,
chlorpyrifos-methyl: O,O-diméthyl O- (3, 5,6-trichloro-2-pyridinyl) phosphorothioate,
cyanophos: O,O dimethylO- (4cyanophenyl) phosphorothioate,
pyraclofos: (R, S) [4-chlorophenyl)-pyrazol-4-yl]-O-ethyl-S-n-propyl phosphorothioate,
acephate: O,S-dimethyl acetylphosphoroamidothioate,
azamethiphos: S- (6-chloro-2, 3-dihydro-oxo-1,3-oxazolo [4, 5-b] pyridin-3-yl methyl phosphorothioate,
malathion: O,O-dimethyl phosphorodithioate ester of diethyl mercaptosuccinate,
temephos: (O,O' (thiodi-4-1-phenylene) O,O,O,O-tetramethyl phosphorodithioate,
dimethoate: ((O, O-diméthyl S-(n-methylcarbamoylmethyl) phosphorodithioate,
formothion: S [2-formylmethylamino]-2-oxoethyl]-O, O-dimehyl phosphorodithioate,
phenthoate: O, O dimethyl S- (alpha-ethoxycarbonylbenzyl)-phosphorodithioate; or
an insecticide having a sterilizing effect on adult mosquitoes such as:
1- ((alfa-4- (chloro-alpha- cyclopropylbenzylidenamino-oxy)-p-tolyl)-3-(2,6-diflourobenzoyl) urea,
diflubenzuron: (((3, 5-dichloro-4- (1,1,2,2-tetraflouroethoxy) phenylamino) carbonyl) 2, 6 diflouro benzamide,
triflumuron: 2-Chloro-N- (((4- (triflouromethoxy) phenyl)-amino-) carbonyl) benzamide, or a triazine such as N-cyclopropyl-1,3,5-triazine-2,4,6-triamine, and
- at least an insect repellent chosen from
N,N-diethyl-meta-toluamide (DEET),
N-butyl-N-acetyl-3-ethylamine propionate (35/35®, Merck)
2-(2-hydroxy-ethyl)-piperidine carboxylic acid ester of 1-methyl-propyl (Bayrepel®, Bayer) N,N-diethylphenylacetamide (DEPA),
1-(3-cyclohexen-1-yl-carbonyl)-2-methylpiperine,
(2 hydroxymethylcyclohexyl) acetic acid lactone,
2-ethyl-1, 3-hexandiol,
indalone,
methylneodecanamide (MNDA), or
an insect repellent derived from a plant extract such as limonene, citronella, eugenol, (+) eucamalol (1), (-)-1-epi-eucamalol,
or a crude extract from plants such as Eucalyptus maculata, Vitex rotundifolia, or Cymbopogan,
the concentration of the insecticide in the product being lower than its lethal concentration 100 (LC100) when it is used alone, and the concentration of insect repellent in the product being lower than the concentration of insect repellent procuring a maximum repellent effect when it is used alone,
as combination products for a use that is simultaneous, separated or spread over time.

2. Use of an insecticide composition according to claim 1, **characterized in that** the concentration of the insecticide in the insecticide composition is comprised from its LC20 to its LC40 when it is used alone.

3. Use of an insecticide composition according to claim 2, **characterized in that** the concentration of the insecticide in the insecticide composition corresponds to its LC30 when it is used alone.

4. Use of an insecticide composition according to one of claims 1 to 3, **characterized in that** the weight ratio between the insecticide concentration and the insect repellent concentration in said insecticide composition is from 1/100 to 1/10.

5. Use of an insecticide composition according to one of claims 1 to 4, wherein the insecticide is propoxur.

6. Use of an insecticide composition according to one of claims 1 to 4, wherein the insecticide is chlorpyrifos-methyl.

7. Use of an insecticide composition according to one of claims 1 to 6, wherein the insect repellent is DEET.

8. Use of an insecticide composition according to one of claims 1 to 6, wherein the insect repellent is N-butyl-N-acetyl-3-ethylamine propionate (35/35®, Merck).

9. Use of an insecticide composition according to one of claims 1 to 6, wherein the insect repellent is 2-(2-hydroxy-ethyl)-piperidine carboxylic acid ester of 1-methyl-propyl (Bayrepel®, Bayer).

10. Use of a synergistic insecticide composition such as defined in one of claims 1 to 9, for the preparation of mosquito nets impregnated with said composition.
